# EUROPEAN PATENT APPLICATION

(11) **EP 3 018 959 A1**
(43) Date of publication of application: **11.05.2016**
(21) Application number: 14306786.6
(22) Date of filing: 07.11.2014
(51) Int. Cl.: H04W 72/12

(54) **Method, user equipment, base station and computer-readable medium for transmitting a buffer status report message**

(71) Applicant: ALCATEL LUCENT, 92100 Boulogne-Billancourt (FR)
(72) Inventor: Lim, Seau Sian, Swindon, Western Isles SN5 7DJ (GB); Worrall, Chandrika, Swindon, Western Isles SN5 7DJ (GB)
(74) Representative: Berthier, Karine

(57) **Abstract**

A method, user equipment, base station and computer readable medium for transmitting a buffer status report message, this message comprising request for resources for device-to-device communication, this method comprising the following steps; a step of transmitting a number of active groups associated to an user equipment, and a step of transmitting a scheduling request message, and a step of receiving an uplink grant message indicating resources dedicated to the transmission of the buffer status report message, the size of the resource depending on the number of active groups.

## Description

### FIELD OF INVENTION

The present subject matter relates to the transmission of resources requirement messages between a user equipment and a base station. More particularly the present subject can be applied within a 3GPP network for the transmission of resources messages between an user equipment and a eNodeB.

### BACKGROUND

In some specification of cellular system, for example in Relase-12 3GPP, a service of device to device proximity communication is included. Within the scope of the 3GPP specification, this service of device to device proximity communication is called D2D and allows communications for both public safety and non-public safety scenarios. This service is also known to the name proximity service or ProSe.

Within the 3GPP specification two types of resource allocation schemes have been introduced namely mode 1 and mode 2 resource allocation schemes for D2D Communication transmission. Mode 1 can only be used when a transmitting user equipment, also known as UE within 3GPP specification, is in coverage, of a base station of the cellular network, and requires the transmitting user equipment to request for radio resources from the network for every transmission or for series of transmissions. Mode 2 can be used when a transmitting user equipment is in coverage or out of-coverage, and in this mode the transmitting user equipment autonomously selects from a pool of radio resources (preconfigured or provided by the cellular network) for every transmission. Such scheme is considered contentious since more than one user equipment may potentially select the same radio resources for transmission at the same time. In both schemes, the resource allocation is used for both the Scheduling Announcement (SA) and also for the transmission of device to device proximity communication data.

Within the 3GPP specification a given user equipment can belong to multiple groups constituted of several user equipment with which the given user equipment can establish device to device proximity communication. In the case of Mode 1, the messages used to make a request resource by the user equipment to the base station (ProSe BSR MAC control element within the 3GPP specification) are thus variable size so that it can accommodate a different number of groups (up to 16 groups within the 3GPP specification). BSR stands for Buffer Status Report and contains the amount of D2D data for each group also called active group that the user equipment needs to send.

In the resource request method described in the 3GPP specification (i.e. between the user equipment and the eNB in 3GPP cellular network), the user equipment will send a scheduling request (SR in 3GPP) message if there is uplink (UL) data available for transmissions. In other words the SR is in 3GPP a request of scheduling radio resource for uplink transmission by the UE to the eNB. The base station will send an uplink grant message indicated resources allocated for the user equipment to transmit the legacy BSR. The user equipment will cancel all the BSR triggers once a regular BSR (i.e. non-padding BSR) is sent. The base station can provide uplink grant messages of size according to the following cases:
(i) If the eNB provides UL grant for a long BSR
(ii) If the eNB provides UL grant for a short BSR

Assuming that there are multiple logical channel groups (LCG) where there are uplink data available:
For the case (i), there is no further issue since the base station has the full knowledge of all the buffer status of the user equipment (i.e. all the buffer status of all the logical channels (or all the logical channel groups) will be known to the base station when the long BSR is received) after receiving the long BSR.
For the case (ii), based on the short/truncated/padding BSR, the base station will only know the buffer status of a logical channel group containing the highest priority logical channel (i.e. only a partial buffer status of the logical channels or buffer status of 1 logical channel group will be provided to the base station). With truncated BSR used for the padding BSR, the base station knows that there are more buffer status to be sent by the user equipment and may provide more uplink grant than is requested as indicated in the truncated BSR.

As for proximity service (ProSe) resource request, the user equipment will also sent the same scheduling request message if there is ProSe data available for transmissions. The base station will allocate resources via uplink grant message for the user equipment to transmit the ProSe BSR. The user equipment will cancel all the ProSe BSR triggers once a non-padding ProSe BSR is sent. The base station can provide a size of resources via a uplink grant message according to the following cases:
(i) The base station provides resources via an uplink grant message for the maximum ProSe BSR size (i.e. up to 16 groups of 2 bytes each + 2 bytes of subheader)
(ii) The base station provides resources via an uplink grant message for ProSe BSR size containing only 1 group (i.e. 2 bytes for 1 group + 2 bytes of subheader)
(iii) The base station provides resources via an uplink grant for long BSR (i.e. 3 bytes + 1 bytes of subheader)
(iv) The base station provides UL grant for short BSR

For the case (i), the base station will know all the buffer status for ProSe communication. However, it is a waste of resources if only a few groups need to be sent.

For the cases (ii) and (iii), the base station will send only a padding ProSe BSR (i.e. truncated ProSe BSR) to the base station. Truncated ProSe BSR or truncated buffer status report message contains the buffer status of a subset of active groups that can be accommodated in uplink grant allocated by the base station. Based on the truncated BSR, the base station can provide further resources via uplink grant messages to accommodate the maximum ProSe BSR size. But again this is a waste of resources if only a few groups need to be sent.

For the case (iv), the user equipment will not be able to send the smallest ProSe BSR. This will require further indication by the base station to the network to prevent this from happening.

In further embodiments of the present subject matter, a method of how the base station will provide the correct resource via uplink grant message for user equipment to facilitate the sending of the ProSe BSR for ProSe communication is described.

### SUMMARY

This summary is provided to introduce concepts related to the transmission of resources requirement messages between user equipment and a base station.

In one implementation, a method for transmitting a buffer status report message is described. This message comprises request for resources for device-to-device communication, this method comprising the following steps a step of transmitting a number of active groups associated to an user equipment, and a step of transmitting a scheduling request message, and a step of receiving an uplink grant message indicating resources dedicated to the transmission of the buffer status report message, the size of the resource depending on the number of active groups.

In another implementation, a method for transmitting a buffer status report message is described. This message comprises request for resources for device-to-device communication, this method comprising the following steps a step of transmitting a schedule request message and; a step of receiving a first uplink grant message indicating first resources and a step of transmitting, using the first indicated resources, a number of active groups associated to an user equipment and eventually a buffer status report message for at least one group and a step of receiving a second uplink grant message indicating second resources dedicated to transmission of the complete buffer status report message, the size of the resource depending on the number of active groups.

In another implementation, a method for transmitting a buffer status report message is described. This message comprises request for resources for device-to-device communication, this method comprises a step of transmitting a scheduling request message, and the following iterative steps realize until a buffer status report message is transmitted a step of receiving an uplink grant message indicating resources dedicated to the transmission of the buffer status report message, if the size of the indicated resources is sufficient to transmit the buffer status report message associated to active groups of an user equipment, a step of transmitting the buffer status report message associated to the active groups, or if the size of the indicated resources is not sufficient to transmit the buffer status report message associated to the active groups, a step of transmitting a truncated buffer status report message.

In another implementation, a method for receiving a buffer status report message is described. This message comprises request for resources for device-to-device communication, this method comprises the following steps: a step of receiving a number of active groups associated to an user equipment, and a step of receiving a scheduling request message, and a step of transmitting an uplink grant message indicating resources dedicated to the transmission of the buffer status report message, the size of the resource depending of the number of active groups.

In another implementation, a method for receiving a buffer status report message is described. This message comprises request for resources for device-to-device communication. This method comprises the following steps a step of receiving a schedule request message and; a step of transmitting a first uplink grant message indicating first resources and a step of receiving, using the first indicated resources, a number of active groups associated to an user equipment and eventually a buffer status report message for at least one group and a step of transmitting a second uplink grant message indicating second resources dedicated to transmission of the complete buffer status report message, the size of the resource depending on the number of active groups.

In another implementation, a method for receiving a buffer status report message is described. This message comprises request for resources for device-to-device communication. This method comprises a step of receiving a scheduling request message, and the following iterative steps realize until the buffer status report message is received; a step of transmitting an uplink grant message indicating resources dedicated to the transmission of the buffer status report message, if a truncated buffer status report message is received, a step of increased the size of the indicated resources prior to send a further uplink grant message, indicating resource dedicated to the transmission of the buffer status report message.

In another implementation user equipment is described.

In another implementation a base station is described.

In another implementation a computer-readable medium is described. This computer-readable medium has embodied thereon a computer program for executing a method for transmitting a buffer status report message, this message comprising request for resources for device-to-device communication, this method comprising the following steps a step of transmitting a number of active groups associated to an user equipment, and a step of transmitting a scheduling request message, and a step of receiving an uplink grant message indicated resources dedicated to the transmission of a buffer status report message, the size of the resource depending of the number of active groups.

In another implementation a computer-readable medium is described. This computer-readable medium has embodied thereon a computer program for executing a method for transmitting a buffer status report message, this message comprising request for resources for device-to-device communication, this method comprising the following steps; a step of transmitting a schedule request message and; a step of receiving a first uplink grant message indicating first resources and a step of transmitting, using the first indicated resources, a number of active groups associated to an user equipment and eventually a buffer status report message for at least one group and a step of receiving a second uplink grant message indicating second resources dedicated to transmission of the complete buffer status report message, the size of the resource depending on the number of active groups.

In another implementation a computer-readable medium is described. This computer-readable medium has embodied thereon a computer program for executing a method for transmitting a buffer status report message, this message comprising request for resources for device-to-device communication, this method comprising; a step of transmitting a scheduling request message, and the following iterative steps realize until the buffer status report message is transmitted; a step of receiving an uplink grant message indicating resources dedicated to the transmission of the buffer status report message, if the size of the indicated resources is sufficient to transmit the buffer status report associated to active groups of an user equipment, a step of transmitting the buffer status report message associated to the active groups, or if the size of the indicated resources is not sufficient to transmit the buffer status report associated to the active groups, a step of transmitting a truncated buffer status report message.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1.a, 1.b and 2 illustrate a first embodiment of the present subject matter.
Figure 3.a, 3.b and 4 illustrate a second embodiment of the present subject matter.
Figure 5.a, 5.b and 6 illustrate a third embodiment of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The present subject matter proposes a method for exchanging a buffer status report message between user equipment and a base station. This message comprises request for resources for device-to-device communication. Within this method the size of resources dedicated to the transmission of the buffer status report message depends on the number of active groups associated to the user equipment.

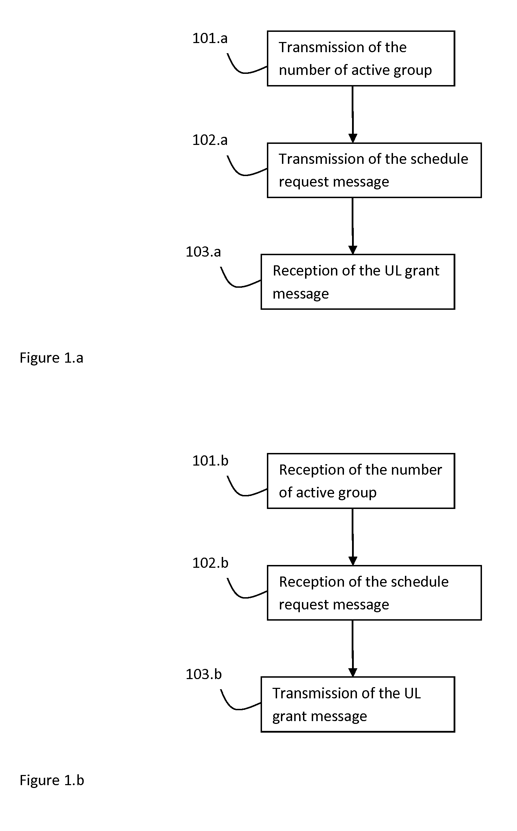

The figure 1.a presents a first embodiment of the present subject matter when realized by the user equipment. The method for transmitting a buffer status report message, this message comprising request for resources for device-to-device communication, this method comprises the following steps;
a step 101.a of transmitting a number of active groups associated to an user equipment, and
a step 102.a of transmitting a scheduling request message, and
a step 103.a of receiving an uplink grant message indicating resources dedicated to the transmission of the buffer status report message, the size of the resources depending of the number of active groups.

In order to determine the size of the resources dedicated to the transmission of the buffer status report message, we can for example multiply the number of active groups by the size of the representation of the resources needed by each active group.

The figure 1.b presents the method for receiving a buffer status report message when realized by the base station, this method comprises the following steps:
a step 101.b of receiving a number of active groups associated to an user equipment, and
a step 102.b of receiving a scheduling request message, and
a step 103.b of transmitting an uplink grant message indicating resources dedicated to the transmission of the buffer status report message, the size of the resource depending of the number of active groups.

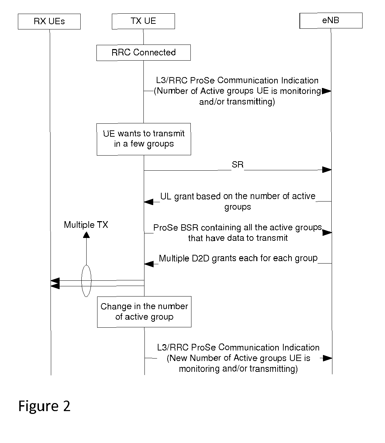

The figure 2 presents also this first embodiment when apply to 3GPP cellular network. In this case the UE provides the number of active groups in the RRC signaling (step 101 of figure 2). Within 3GPP specification, RRC stands for Radio Resource Control and designates the protocol belongs to the UMTS WCDMA protocol stack and handles the control plane signaling of Layer 3 between the UEs (User Equipment) and the UTRAN. It includes: If this number of group changes, it will report it again so that the eNB can provide sufficient resources for ProSe BSR. Alternative, the UE will always provide all the groups it belongs to in the RRC signaling and the eNB will always provide enough UL grant (step 103 of figure 2) in the Uu air interface (the Uu air interface is the interface between the User equipment and the eNodeB) for the sending of a ProSe BSR message by the UE, after the reception of an scheduling request message (step 102 of figure 2).

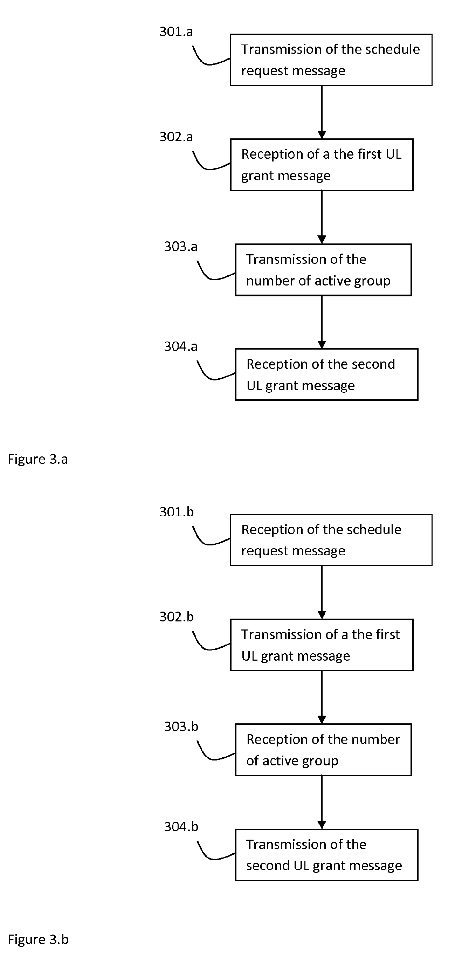

The figure 3.a presents a second embodiment of the present subject matter when realized by the user equipment. In this embodiment the method for transmitting a buffer status report message comprises;
a step 301.a of transmitting a schedule request message and;
a step 302.a of receiving a first uplink grant message indicating first resources
a step 303.a of transmitting, using the first indicated resources, a number of active groups associated to a user equipment and eventually a buffer status report message for at least one group;
the step 304.a of receiving a second uplink grant message indicating second resources dedicated to transmission of the complete buffer status report message, the size of the resource depending on the number of active groups.

In other words, this second embodiment of the present subject matter, when realized by the user equipment, comprises the step 102.a of transmitting a scheduling request message, realized in first and the step 101.a of transmitting a number of active groups, realized prior to the step 103.a of receiving an uplink grant message and is configured to use a further resource allocated during a step 302.a of receiving a first uplink grant message indicated resources.

The figure 3.b presents a second embodiment of the present subject matter when realized by the base station. In this embodiment the method for receiving a buffer status report message comprises;
a step 301.b of receiving a schedule request message and;
a step 302.b of transmitting a first uplink grant message indicating first resources and
a step 303.b of receiving, using the first indicated resources, a number of active groups associated to an user equipment and eventually a buffer status report message for at least one group; and
a step 304.b of transmitting a second uplink grant message indicating second resources dedicated to transmission of the complete buffer status report message, the size of the resource depending on the number of active groups.

In other words, this second embodiment of the present subject matter, when realized by the base station, comprises the step 102.b of receiving a scheduling request message, realized in first and the step 101.b of receiving a number of active groups, realized prior to the step 103.b of transmitting an uplink grant message and is configured to use a further resource allocated during a step 302.b of transmitting a first uplink grant message indicated resources.

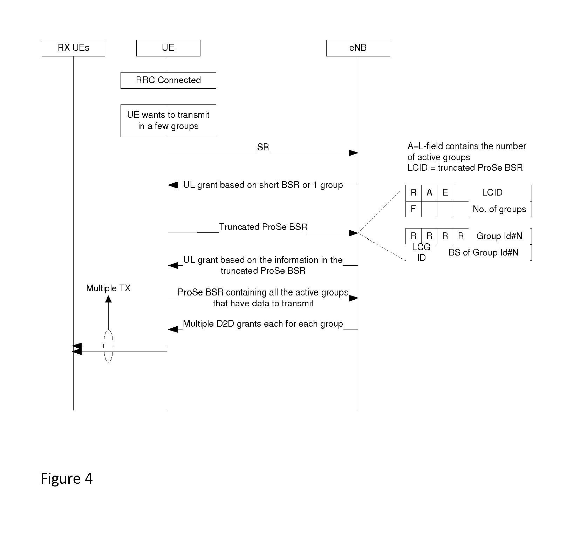

The figure 4 presents also this second embodiment when apply to 3GPP cellular network. In this case the UE provides the number of active groups in the MAC signaling (step 101 of figure 3). In the case the size of the UL grant is only short BSR (i.e. 2 bytes), the UE can use the subheader of the ProSe BSR to indicate the number of groups in the L-field of the subheader (step 301 of figure 3). In the case the size of the UL grant is only sufficient for 1 group of ProSe BSR (i.e. a truncated BSR), the L-field in the subheader of the truncated BSR can be used to indicate the number of groups. Both cases are illustrated in figure 4. Alternatively, a new format with a new LCID can be provided. In the case the size of the UL grant can accommodate multiple groups but less than the number of active groups, the UE can use truncated BSR to send the ProSe BSR. The eNB will then provide sufficient grant for 1 group and the UE can then provide the number of active groups in the subsequent ProSe BSR. This is illustrated in figure 4 (step 301 of figure 3). After that the eNB will provide enough resources to send the ProSe BSR of all the active groups (step 103 of figure 3).

In another word the basic idea, of these two first embodiments of the present subject matter, is the user equipment provides the base station with the groups that the user equipment are currently active (i.e. actively monitoring or transmitting) in either the RRC signaling or in the L2 signaling so that the base station will provide resources, via an uplink grant message, not more than is needed to transmit the ProSe BSR message when the scheduling request is initiated by the user equipment.

These two first embodiments can also contains a last step of transmitting the buffer status report message, associated to the active groups, using the indicated resources when the method is realized by the user equipment or can also contains a last step of receiving the buffer status report message, associated to the active groups, using the indicated resources when the method is realized by the base station.

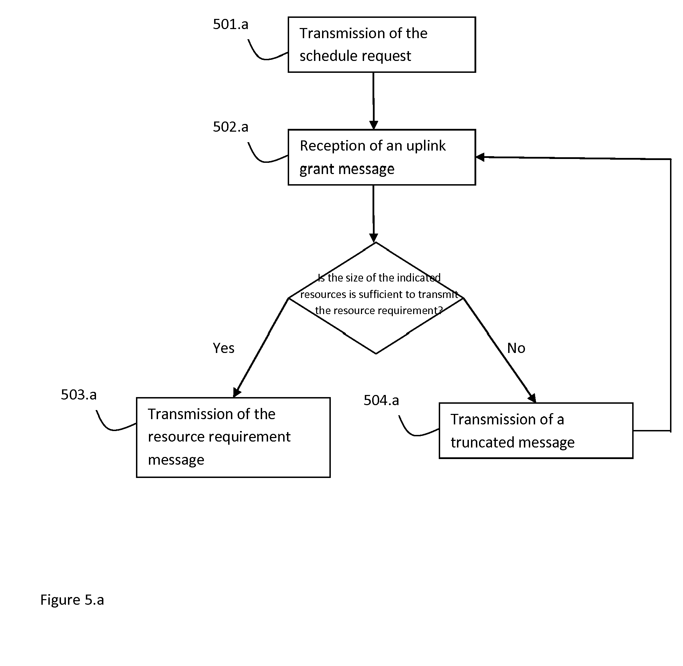

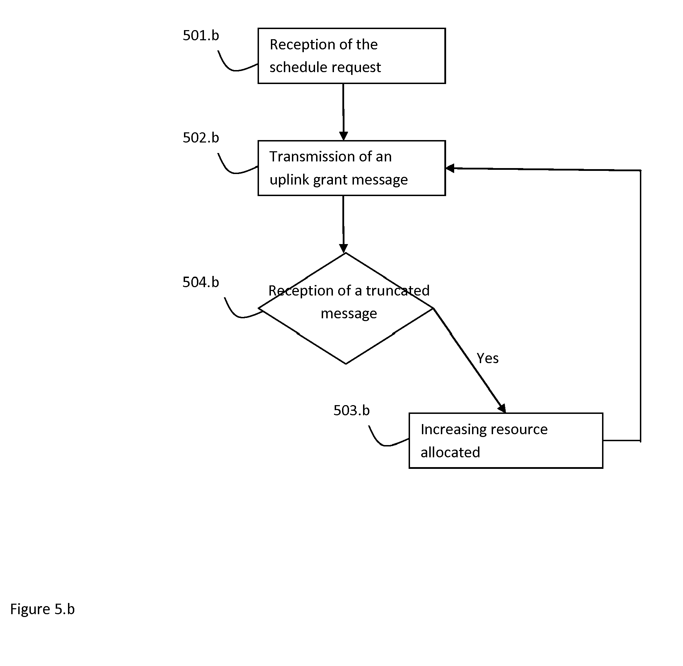

The figure 5.a describes a third embodiment of the present subject matter when realized by the user equipment. The method for transmitting a buffer status report message, of this third embodiment comprises;
a step 501.a of transmitting a scheduling request message, and the following iterative steps realize until the buffer status report message is transmitted;
a step 502.a of receiving an uplink grant message indicating resources dedicated to the transmission of the buffer status report message,
if the size of the indicated resources is sufficient to transmit the buffer status report associated to active groups of an user equipment, a step 503.a of transmitting the buffer status report message associated to the active groups, or
if the size of the indicated resources is not sufficient to transmit the buffer status report associated to the active groups, a step 504.a of transmitting a truncated buffer status report message.

The figure 5.b describes a third embodiment of the present subject matter when realized by the base station. The method for receiving a buffer status report message, of this third embodiment comprises
a step 501.b of receiving a scheduling request message, and
the following iterative steps realize until the buffer status report message is received;
a step 502.b of transmitting an uplink grant message indicating resources dedicated to the transmission of the buffer status report message,
if a truncated buffer status report message is received 504.b, a step 503.b of increased the size of the indicated resources prior to send a further uplink grant message, indicating resource dedicated to the transmission of the buffer status report message.

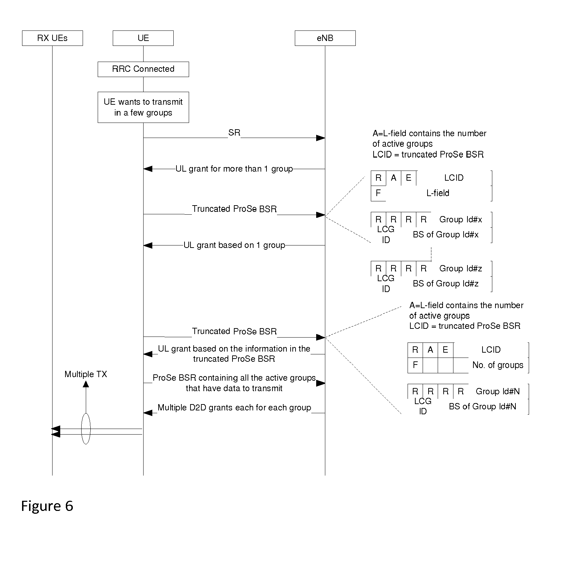

The figure 6 presents also this third embodiment when apply to 3GPP cellular network wherein the eNB keeps increasing the size of the UL grant until a non-truncated BSR (i.e. not a padding BSR) has been sent by the UE. With the non-padding or non-truncated BSR, the eNB will have the full picture of the amount of D2D data that the user equipment needs to send.

An embodiment of the present subject matter comprises a user equipment. In an embodiment, the user equipment includes one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The modules, included inside the memory of the user equipment, allow the executions of the method according to the figures 1a, 3.a or 5.a.

An embodiment of the present subject matter comprises a base station. This base station includes one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

As previously explained, the functions realized by the first and second processors may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

As previously explained, the first and second memories may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The modules, included inside the memory of the base station, allow the executions of the method according to the figures 1b, 3.b or 5.b.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an embodiment of the subject matter, the method, described figure 1.a, for transmitting a buffer status report message, this message comprising request for resources for device-to-device communication, this method comprises the following steps;
a step 101.a of transmitting a number of active groups associated to an user equipment, and
a step 102.a of transmitting a scheduling request message, and
a step 103.a of receiving an uplink grant message indicating resources dedicated to the transmission of the buffer status report message, the size of the resources depending of the number of active groups.

In an embodiment of the subject matter, the method, described figure 1.b, for receiving a buffer status report message when realized by the base station, this method comprises the following steps:
a step 101.b of receiving a number of active groups associated to an user equipment, and
a step 102.b of receiving a scheduling request message, and
a step 103.b of transmitting an uplink grant message indicating resources dedicated to the transmission of the buffer status report message, the size of the resource depending of the number of active groups.

In an embodiment of the subject matter, the method, described figure 3.a, for transmitting a buffer status report message, this method comprises the following steps:
a step 301.a of transmitting a schedule request message and;
a step 302.a of receiving a first uplink grant message indicating first resources and
a step 303.a of transmitting, using the first indicated resources, a number of active groups associated to an user equipment and eventually a buffer status report message for at least one group; and
a step 304.a of receiving a second uplink grant message indicating second resources dedicated to transmission of the complete buffer status report message, the size of the resource depending on the number of active groups.

In an embodiment of the subject matter, the method, described figure 3.b, for receiving a buffer status report message comprises;
a step 301.b of receiving a schedule request message and;
a step 302.b of transmitting a first uplink grant message indicating first resources and
a step 303.b of receiving, using the first indicated resources, a number of active groups associated to an user equipment and eventually a buffer status report message for at least one group; and
a step 304.b of transmitting a second uplink grant message indicating second resources dedicated to transmission of the complete buffer status report message, the size of the resource depending on the number of active groups.

In an embodiment of the subject matter, the method, described figure 5.a, for transmitting a buffer status report message when realized by the base station, this method comprises the following steps:
a step 501.a of transmitting a scheduling request message, and
the following iterative steps realize until the buffer status report message is transmitted;
a step 502.a of receiving an uplink grant message indicating resources dedicated to the transmission of the buffer status report message,
if the size of the indicated resources is sufficient to transmit the buffer status report associated to active groups of an user equipment, a step 503.a of transmitting the buffer status report message associated to the active groups, or
if the size of the indicated resources is not sufficient to transmit the buffer status report associated to the active groups, a step 504.a of transmitting a truncated buffer status report message.

In an embodiment of the subject matter, the method, described figure 5.b, for receiving a buffer status report message, of this third embodiment comprises
a step 501.b of receiving a scheduling request message, and
the following iterative steps realize until the buffer status report message is received;
a step 502.b of transmitting an uplink grant message indicating resources dedicated to the transmission of the buffer status report message,
if a truncated buffer status report message is received 504.b, a step 503.b of increased the size of the indicated resources prior to send a further uplink grant message, indicating resource dedicated to the transmission of the buffer status report message.

## Claims

1. A method for transmitting a buffer status report message, this message comprising request for resources for device-to-device communication, this method comprising the following steps;
a step (101.a) of transmitting a number of active groups associated to an user equipment, and
a step (102.a) of transmitting a scheduling request message, and
a step (103.a) of receiving an uplink grant message indicating resources dedicated to the transmission of the buffer status report message, the size of the resource depending on the number of active groups.

2. The method according to claim 1 also comprising;
a step of transmitting the buffer status report message, associated to the active groups, using the indicated resources.

3. A method for transmitting a buffer status report message, this message comprising request for resources for device-to-device communication, this method comprising the following steps;
a step (301.a) of transmitting a schedule request message and;
a step (302.a) of receiving a first uplink grant message indicating first resources and
a step (303.a) of transmitting, using the first indicated resources, a number of active groups associated to an user equipment and eventually a buffer status report message for at least one group and;
a step (304.a) of receiving a second uplink grant message indicating second resources dedicated to transmission of the complete buffer status report message, the size of the resource depending on the number of active groups.

4. The method according to claim 3 also comprising;
a step of transmitting the buffer status report message, associated to the active groups, using the second indicated resources.

5. A method for transmitting a buffer status report message, this message comprising request for resources for device-to-device communication, this method comprising;
a step (501.a) of transmitting a scheduling request message, and
the following iterative steps realize until a buffer status report message is transmitted;
a step (502.a) of receiving an uplink grant message indicating resources dedicated to the transmission of the buffer status report message and,
if the size of the indicated resources is sufficient to transmit the buffer status report message associated to active groups of an user equipment, a step (503.a) of transmitting the buffer status report message associated to the active groups, or
if the size of the indicated resources is not sufficient to transmit the buffer status report message associated to the active groups, a step (504.a) of transmitting a truncated buffer status report message.

6. A method for receiving a buffer status report message, this message comprising request for resources for device-to-device communication, this method comprising the following steps:
a step (101.b) of receiving a number of active groups associated to an user equipment, and
a step (102.b) of receiving a scheduling request message, and
a step (103.b) of transmitting an uplink grant message indicating resources dedicated to the transmission of the buffer status report message, the size of the resource depending of the number of active groups.

7. A method for receiving a buffer status report message, this message comprising request for resources for device-to-device communication, this method comprising;
a step (301.b) of receiving a schedule request message and;
a step (302.b) of transmitting a first uplink grant message indicating first resources and
a step (303.b) of receiving, using the first indicated resources, a number of active groups associated to an user equipment and eventually a buffer status report message for at least one group; and
a step (304.b) of transmitting a second uplink grant message indicating second resources dedicated to transmission of the complete buffer status report message, the size of the resource depending on the number of active groups.

8. A method according to claim 7 also comprising;
a step of receiving the buffer status report message, using the second indicated resource.

9. A method for receiving a buffer status report message, this message comprising request for resources for device-to-device communication, this method comprising;
a step (501.b) of receiving a scheduling request message, and
the following iterative steps realize until the buffer status report message is received;
a step (502.b) of transmitting an uplink grant message indicating resources dedicated to the transmission of the buffer status report message,
if a truncated buffer status report message is received (504.b), a step (503.b) of increased the size of the indicated resources prior to send a further uplink grant message, indicating resource dedicated to the transmission of the buffer status report message.

10. A method according to claim 6 or 9 also comprising;
a step of receiving the buffer status report message, using the indicated resource.

11. An user equipment configured to realize the method according to any of the claims 1 to 5.

12. A base station configured to realize the method according to the claim 6 or 10.

13. A computer-readable medium having embodied thereon a computer program for executing a method for transmitting a buffer status report message, this message comprising request for resources for device-to-device communication, this method comprising the following steps;
a step (101.a) of transmitting a number of active groups associated to an user equipment, and
a step (102.a) of transmitting a scheduling request message, and
a step (103.a) of receiving an uplink grant message indicated resources dedicated to the transmission of a buffer status report message, the size of the resource depending of the number of active groups.

14. A computer-readable medium having embodied thereon a computer program for executing a method for transmitting a buffer status report message, this message comprising request for resources for device-to-device communication, this method comprising the following steps;
a step (301.a) of transmitting a schedule request message and;
a step (302.a) of receiving a first uplink grant message indicating first resources and
a step (303.a) of transmitting, using the first indicated resources, a number of active groups associated to an user equipment and eventually a buffer status report message for at least one group; and
a step (304.a) of receiving a second uplink grant message indicating second resources dedicated to transmission of the complete buffer status report message, the size of the resource depending on the number of active groups.

15. A computer-readable medium having embodied thereon a computer program for executing a method for transmitting a buffer status report message, this message comprising request for resources for device-to-device communication, this method comprising;
a step (501.a) of transmitting a scheduling request message, and
the following iterative steps realize until the buffer status report message is transmitted;
a step (502.a) of receiving an uplink grant message indicating resources dedicated to the transmission of the buffer status report message,
if the size of the indicated resources is sufficient to transmit the buffer status report associated to active groups of an user equipment, a step (503.a) of transmitting the buffer status report message associated to the active groups, or
if the size of the indicated resources is not sufficient to transmit the buffer status report associated to the active groups, a step (504.a) of transmitting a truncated buffer status report message.

## Amended claims

### Amended claims in accordance with Rule 137(2) EPC.

1. A method for transmitting a buffer status report message, this message comprising request for resources for device-to-device communication, this method comprising the following steps;
a step (101.a) of transmitting a number of active groups associated to an user equipment, and
a step (102.a) of transmitting a scheduling request message, and
a step (103.a) of receiving an uplink grant message indicating resources dedicated to the transmission of the buffer status report message, the size of the resource depending on the number of active groups, and
a step of transmitting the buffer status report message, associated to the active groups, using the indicated resources.

2. A method for transmitting a buffer status report message, this message comprising request for resources for device-to-device communication, this method comprising the following steps;
a step (301.a) of transmitting a schedule request message and;
a step (302.a) of receiving a first uplink grant message indicating first resources and
a step (303.a) of transmitting, using the first indicated resources, a number of active groups associated to an user equipment and a buffer status report message for at least one group and;
a step (304.a) of receiving a second uplink grant message indicating second resources dedicated to transmission of the complete buffer status report message, the size of the resource depending on the number of active groups and,
a step of transmitting the buffer status report message, associated to the active groups, using the second indicated resources.

3. A method for receiving a buffer status report message, this message comprising request for resources for device-to-device communication, this method comprising the following steps:
a step (101.b) of receiving a number of active groups associated to an user equipment, and
a step (102.b) of receiving a scheduling request message, and
a step (103.b) of transmitting an uplink grant message indicating resources dedicated to the transmission of the buffer status report message, the size of the resource depending of the number of active groups and,
a step of receiving the buffer status report message, using the indicated resource.

4. A method for receiving a buffer status report message, this message comprising request for resources for device-to-device communication, this method comprising;
a step (301.b) of receiving a schedule request message and;
a step (302.b) of transmitting a first uplink grant message indicating first resources and
a step (303.b) of receiving, using the first indicated resources, a number of active groups associated to an user equipment and a buffer status report message for at least one group; and
a step (304.b) of transmitting a second uplink grant message indicating second resources dedicated to transmission of the complete buffer status report message, the size of the resource depending on the number of active groups and,
a step of receiving the buffer status report message, using the second indicated resource.

5. An user equipment configured to realize the method according to the claim 1 or 2.

6. A base station configured to realize the method according to the claim 3 or 4.

7. A computer-readable medium having embodied thereon a computer program for executing a method for transmitting a buffer status report message, this message comprising request for resources for device-to-device communication, this method comprising the following steps;
a step (101.a) of transmitting a number of active groups associated to an user equipment, and
a step (102.a) of transmitting a scheduling request message, and
a step (103.a) of receiving an uplink grant message indicated resources dedicated to the transmission of a buffer status report message, the size of the resource depending of the number of active groups.

8. A computer-readable medium having embodied thereon a computer program for executing a method for transmitting a buffer status report message, this message comprising request for resources for device-to-device communication, this method comprising the following steps;
a step (301.a) of transmitting a schedule request message and;
a step (302.a) of receiving a first uplink grant message indicating first resources and
a step (303.a) of transmitting, using the first indicated resources, a number of active groups associated to an user equipment and a buffer status report message for at least one group; and
a step (304.a) of receiving a second uplink grant message indicating second resources dedicated to transmission of the complete buffer status report message, the size of the resource depending on the number of active groups.
